(19) Europäisches Patentamt
European Patent Office
Office européen des brevets

(11) **EP 3 153 831 A1**

(12) **DEMANDE DE BREVET EUROPEEN**

(43) Date de publication:
**12.04.2017 Bulletin 2017/15**

(51) Int Cl.:
*G01J 5/08* (2006.01)    *G01J 5/02* (2006.01)
*G01J 5/10* (2006.01)    *G01J 5/20* (2006.01)

(21) Numéro de dépôt: **16192592.0**

(22) Date de dépôt: **06.10.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **09.10.2015 FR 1559630**

(71) Demandeur: **Commissariat à l'Energie Atomique
et aux Energies
Alternatives
75015 Paris (FR)**

(72) Inventeurs:
• **BOUTAMI, Salim**
  **38100 GRENOBLE (FR)**
• **ELOI, Fabien**
  **91300 MASSY (FR)**
• **HAZART, Jérôme**
  **38320 EYBENS (FR)**
• **YON, Jean-Jacques**
  **38360 SASSENAGE (FR)**

(74) Mandataire: **Brevalex
56, Boulevard de l'Embouchure
B.P. 27519
31075 Toulouse Cedex 2 (FR)**

(54) **BOLOMÈTRE À FORTE SENSIBILITÉ SPECTRALE**

(57) L'invention concerne un détecteur bolométrique (100) comprenant :
- une membrane d'absorption (110), pour convertir en chaleur un rayonnement électromagnétique incident (200) ; et
- un réflecteur (120), pour réfléchir vers la membrane d'absorption une part du rayonnement électromagnétique incident ayant traversé celle-ci.

Le détecteur bolométrique selon l'invention présente les caractéristiques suivantes :

- il comprend une couche non métallique (130), située entre la membrane d'absorption et le réflecteur, présentant une série de sauts d'indice, de façon à former un réseau résonant à une longueur d'onde d'intérêt $\lambda_0$ ;
- le pas moyen du réseau (P) est inférieur à $\lambda_0$; et
- la distance optique entre la membrane d'absorption et le réflecteur est sensiblement égale à un multiple de $\lambda_0/2$.

Le détecteur bolométrique présente ainsi une excellente sensibilité spectrale, présentant un intérêt particulier notamment pour la réalisation de capteurs de gaz.

FIG.1A

EP 3 153 831 A1

**Description**

**DOMAINE TECHNIQUE**

L'invention concerne un détecteur bolométrique, c'est-à-dire un détecteur qui convertit en chaleur l'énergie d'un rayonnement électromagnétique incident, de sorte qu'une intensité de ce rayonnement correspond à une variation de température.

Les détecteurs bolométriques sont adaptés notamment à détecter des rayonnements électromagnétiques situés dans l'infrarouge, en particulier à des longueurs d'onde comprises entre 0,7 $\mu$m et 3 mm.

**ÉTAT DE LA TECHNIQUE ANTÉRIEURE**

On connaît dans l'art antérieur des bolomètres tels que décrits à la figure 1A de la demande de brevet FR-2977937, comprenant une membrane formant un bloc absorbeur-thermistor, suspendue au-dessus d'un réflecteur, à une distance $\lambda_0/4$ de celui-ci, où $\lambda_0$ est la longueur d'onde centrale d'une bande spectrale de détection.

La membrane comprend un élément absorbeur tel qu'une fine couche de métal, qui absorbe un rayonnement électromagnétique incident et dont la température augmente en réaction à cette absorption, et un élément thermométrique dont la résistivité varie avec la température.

Le réflecteur et le bloc absorbeur-thermistor forment ensemble une cavité quart-d'onde permettant une absorption élevée, typiquement 90%, sur une bande spectrale allant de 8 à 12 $\mu$m ou sur une bande spectrale allant de 3 $\mu$m à 5 $\mu$m.

Un inconvénient de ce bolomètre est qu'il n'offre pas une grande sélectivité spectrale, toutes les longueurs d'onde étant absorbées sur une largeur spectrale de plusieurs micromètres.

Pour pallier cet inconvénient, le document propose de déposer, sur la membrane formant un bloc absorbeur-thermistor, un empilement métal-isolant-métal (structure MIM). Au moins une dimension latérale de l'empilement est déterminée pour générer une résonance plasmonique avec une radiation incidente de fréquence comprise dans ladite bande spectrale large.

Un inconvénient de ces empilements déposés sur la membrane absorbante est qu'ils augmentent la masse thermique de cette dernière, et donc la constante de temps thermique.

Un objectif de la présente invention est de proposer un détecteur bolométrique présentant une grande sélectivité spectrale, et qui ne présente pas au moins l'un des inconvénients de l'art antérieur.

En particulier, un but de la présente invention est de proposer un détecteur bolométrique présentant une grande sélectivité spectrale, et une masse thermique équivalente à celle du bloc absorbeur-thermistor pris seul.

**EXPOSÉ DE L'INVENTION**

Cet objectif est atteint avec un détecteur bolométrique à au moins un pixel, chaque pixel comprenant :

- une membrane d'absorption, adaptée à convertir en chaleur un rayonnement électromagnétique incident ; et
- un réflecteur, agencé pour réfléchir vers la membrane d'absorption une part du rayonnement électromagnétique incident ayant traversé celle-ci.

Selon l'invention, le détecteur bolométrique présente les caractéristiques suivantes :

- au moins un pixel comprend en outre une couche non métallique dite couche structurée, située entre la membrane d'absorption et le réflecteur, présentant une série de sauts d'indice entre un premier indice optique et un second indice optique dans un plan parallèle à la membrane d'absorption, de façon à former un réseau résonant à une longueur d'onde dite d'intérêt $\lambda_0$ ;
- le pas moyen du réseau est inférieur à ladite longueur d'onde d'intérêt ; et
- la distance optique entre la membrane d'absorption et le réflecteur est sensiblement égale à un multiple de $\lambda_0/2$.

La couche structurée ne convertit pas en chaleur un rayonnement électromagnétique incident, car elle est non métallique.

Dans la couche structurée, chaque saut d'indice est constitué par une interface entre un premier matériau et un second matériau.

La couche structurée forme un réseau résonant à une longueur d'onde d'intérêt. Il s'agit en particulier d'un réseau dit sub-longueur d'onde, le pas moyen du réseau étant inférieur à ladite longueur d'onde d'intérêt. En d'autres termes, un écart moyen entre deux sauts d'indice successifs du premier indice optique vers le second indice optique, est inférieur à cette longueur d'onde d'intérêt.

Le réseau étant sub-longueur d'onde, il ne s'y produit pas de phénomène de diffraction. Au moins une partie du rayonnement électromagnétique incident traverse la membrane d'absorption, et atteint la couche structurée où se produit le phénomène de résonance à la longueur d'onde d'intérêt. Il se forme ainsi un pic d'intensité électromagnétique étroit, centré sur la longueur d'onde d'intérêt.

Ce pic d'intensité est émis en direction de la membrane d'absorption, et/ou en direction du réflecteur qui le renvoie vers la membrane d'absorption.

Ce pic d'intensité est ensuite absorbé par la membrane d'absorption, qui présente alors un pic étroit d'énergie d'absorbée, centré sur ladite longueur d'onde d'intérêt. Ce pic est dit étroit, car il présente une largeur à mi-hauteur inférieure à 150 nm, voire 100 nm, 50 nm, 10 nm ou même moins.

A ce premier phénomène s'ajoute un second phénomène, lié à la distance optique entre la membrane d'absorption et le réflecteur. Le spectre global de la puissance absorbée par la membrane d'absorption en fonction de la longueur d'onde dépend de ces deux phénomènes.

Dans l'art antérieur, la distance optique entre la membrane d'absorption et le réflecteur est égale à $\lambda_0/4$, pour former une cavité résonante sur une large bande spectrale centrée sur la longueur d'onde $\lambda_0$.

Ici, la distance optique entre la membrane d'absorption et le réflecteur est sensiblement égale à un multiple de $\lambda_0/2$, où $\lambda_0$ est la longueur d'onde d'intérêt. Ainsi, pour une large bande spectrale centrée sensiblement sur $\lambda_0$, un rayonnement électromagnétique incident sur le réflecteur est en opposition de phase avec un rayonnement électromagnétique réfléchi par le réflecteur. Par conséquent, pour une large bande spectrale centrée sensiblement sur $\lambda_0$, le spectre de l'énergie absorbée par la membrane d'absorption présente un creux large bande. Le creux est dit large bande, car il présente une largeur à mi-hauteur supérieure à 500 nm, voire même 1 $\mu$m ou même plus. Ce creux correspond à une absorption faible, inférieure à 20%, sur une largeur spectrale supérieure à 100 nm, et même 200 nm, 300 nm ou plus.

Le spectre global de la puissance absorbée par la membrane d'absorption en fonction de la longueur d'onde présente à la fois le creux large bande, et le pic étroit, tels que décrits ci-dessus.

Ainsi, autour de la longueur d'onde d'intérêt, la membrane d'absorption présente un pic d'absorption étroit, entouré de part et d'autre par des zones de faible absorption. Ainsi, sur la bande spectrale correspondant au creux large bande, le détecteur bolométrique selon l'invention présente une forte sensibilité spectrale.

En particulier, le détecteur bolométrique selon l'invention présente, sur la bande spectrale correspondant au creux large bande, un facteur de qualité supérieur à 20.

Cette forte sélectivité spectrale est obtenue à l'aide d'un choix astucieux de la distance optique entre le réflecteur et la membrane d'absorption, et d'une couche structurée située entre les deux. La couche structurée n'est pas déposée sur la membrane d'absorption. Par conséquent, elle n'augmente pas la masse thermique de la membrane d'absorption. Ainsi, le détecteur bolométrique selon l'invention présente une très bonne constante de temps thermique, inférieure à celles des bolomètres à structure MIM décrits en introduction.

En outre, la forte sélectivité spectrale d'un pixel du détecteur bolométrique selon l'invention est obtenue sans qu'il soit nécessaire de placer un filtre spectral en amont de ce pixel.

La longueur d'onde d'intérêt selon l'invention est fonction des caractéristiques de la couche structurée. On peut donc réaliser un détecteur bolométrique présentant deux pixels adjacents qui ne sont pas sensibles tous deux à la même longueur d'onde d'intérêt, sans filtre spectral en amont de chaque pixel.

On évite ainsi qu'un rayonnement lumineux filtré par le filtre spectral d'un premier pixel soit reçu par un pixel adjacent (phénomènes dit de cross-talk).

En outre, l'invention permet d'affiner encore la sélectivité spectrale de chaque pixel à l'aide de filtres placés en amont. Un rayonnement lumineux filtré par le filtre spectral d'un premier pixel, et reçu par un pixel adjacent, ne produit pas d'échauffement de la membrane d'absorption dudit pixel adjacent, grâce à la sélectivité spectrale intrinsèque de chaque pixel.

De préférence, une différence entre le premier indice optique et le second indice optique est supérieure à 0,5.

Le pas moyen du réseau peut être compris entre $\lambda_0/2$ et $\lambda_0$, où $\lambda_0$ est la longueur d'onde d'intérêt.

Le réseau résonant est avantageusement un réseau périodique.

En variante, le réseau résonant peut être un réseau pseudo-périodique, présentant des variations de la forme du motif élémentaire telles qu'un taux de recouvrement relativement à une forme moyenne des motifs élémentaires soit compris entre 90% et 99%.

Le réseau résonant peut présenter des sauts d'indice répartis selon les deux dimensions d'un plan parallèle à la membrane d'absorption.

En variante, le réseau résonant peut présenter des sauts d'indice répartis selon une seule dimension d'un plan parallèle à la membrane d'absorption.

Chaque saut d'indice est avantageusement constitué par une interface entre un premier matériau et un second matériau, l'un desdits matériaux étant un vide ou un gaz tel que l'air.

De préférence, un écart entre la couche structurée et la membrane d'absorption est inférieur à $\lambda_0/2$, où $\lambda_0$ est la longueur d'onde d'intérêt.

La couche structurée peut être recouverte d'une couche non métallique dite couche bas indice, espacée de la membrane d'absorption.

Le détecteur bolométrique selon l'invention présente avantageusement une pluralité de pixels, et au moins deux pixels diffèrent par leur forme moyenne des motifs élémentaires de sorte qu'ils sont adaptés à la détection de longueurs d'onde d'intérêt différentes.

Selon un mode de réalisation avantageux, chaque pixel présente une couche bas indice, recouvrant la couche structurée associée à ce pixel et espacée de la membrane d'absorption correspondante, les couches bas indice associées chacune à un pixel présentant différentes épaisseurs.

Une couche intermédiaire non métallique peut s'étendre entre le réflecteur et la membrane structurée.

L'invention concerne également un capteur de gaz comprenant une source infrarouge, agencée pour émettre un rayonnement électromagnétique à l'intérieur d'une cavité, la cavité contenant un détecteur bolométrique selon l'invention.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de façon schématique, selon deux vues en coupe, un premier mode de réalisation d'un détecteur bolométrique selon l'invention ;
- la figure 2 illustre des spectres d'absorption de détecteurs bolométriques du type de celui des figures 1A et 1B ;
- les figures 3A et 3B illustrent de façon schématique, selon deux vues en coupe, un deuxième mode de réalisation d'un détecteur bolométrique selon l'invention ;
- la figure 4 illustre des spectres d'absorption de détecteurs bolométriques du type de celui des figures 3A et 3B ;
- les figures 5A à 5C illustrent différentes variantes d'une couche structurée d'un détecteur bolométrique selon l'invention ;
- la figure 6 illustre de façon schématique un troisième mode de réalisation d'un détecteur bolométrique selon l'invention ;
- la figure 7 illustre de façon schématique un quatrième mode de réalisation d'un détecteur bolométrique selon l'invention ;
- les figures 8A et 8B illustrent deux autres variantes d'une couche structurée d'un détecteur bolométrique selon l'invention ;
- la figure 9 illustre de façon schématique deux pixels d'un cinquième mode de réalisation d'un détecteur bolométrique selon l'invention ; et
- la figure 10 illustre de façon schématique un capteur de gaz comportant un détecteur bolométrique selon l'invention.

## EXPOSÉ DÉTAILLÉ DE MODES DE RÉALISATION PARTICULIERS

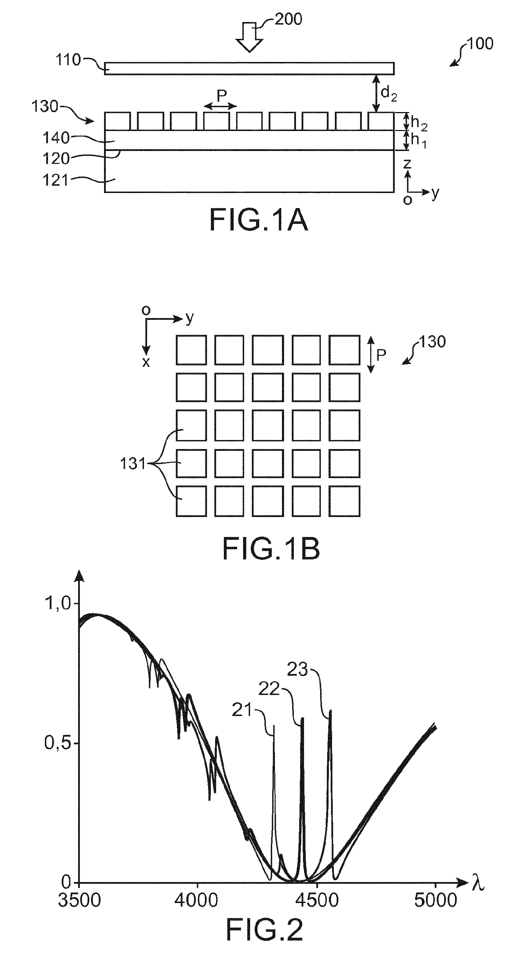

La figure 1A illustre un premier mode de réalisation d'un détecteur bolométrique 100 selon l'invention.

Pour des raisons de lisibilité des figures, on a représenté un seul pixel dudit détecteur.

Chaque pixel comprend une membrane d'absorption 110 et un réflecteur 120.

La membrane d'absorption 110 est constituée d'un matériau adapté à convertir en chaleur l'énergie d'un rayonnement électromagnétique incident, notamment un rayonnement infrarouge, à une longueur d'onde comprise entre 0,7 $\mu$m et 3 mm (de l'infrarouge proche à l'infrarouge lointain). La membrane d'absorption est notamment adaptée à convertir en chaleur des longueurs d'onde comprise entre 3 $\mu$m et 12 $\mu$m. La membrane d'absorption, ou planche bolométrique, peut être en métal, en particulier en nitrure de titane (TiN). La membrane d'absorption est continue au sens où elle ne présente pas de trous, autrement dit sa forme est simplement connexe.

La membrane d'absorption 110 est en contact thermique avec un élément thermométrique, non représenté, permettant de mesurer l'échauffement de la membrane d'absorption. L'élément thermométrique est par exemple une couche d'un matériau présentant une forte variation de résistivité en fonction de la température, déposée directement sur la membrane d'absorption. L'élément thermométrique est par exemple en oxyde de vanadium.

Le réflecteur 120, ou miroir, est constitué d'une surface réfléchissante faisant face à la membrane d'absorption. Le réflecteur 120 peut être formé par un traitement réfléchissant déposé sur un substrat 121. Le réflecteur est réfléchissant aux longueurs d'onde auxquelles la membrane d'absorption est absorbante. Il peut être constitué d'une très fine couche métallique, par exemple une couche de cuivre ou d'aluminium de 50 nm d'épaisseur.

Le réflecteur 120 s'étend parallèle à la membrane d'absorption 110, du côté opposé à une source émettant le rayonnement électromagnétique 200.

Le réflecteur 120 et la membrane d'absorption 110 sont des éléments connus d'un détecteur bolométrique, c'est pourquoi ils ne sont pas décrits ici plus avant.

Au moins un pixel du détecteur bolométrique selon l'invention, de préférence tous, présente les caractéristiques supplémentaires telles que décrites dans la suite, de façon à présenter une forte sensibilité spectrale.

Une couche dite structurée 130, non métallique, est intercalée entre le réflecteur 120 et la membrane d'absorption 110, à distance de chacun de ces deux éléments.

La membrane d'absorption 110 est suspendue au-dessus de la couche structurée 130 par des moyens de support, thermiquement isolants, non représentés.

En particulier, la distance $d_2$ entre la couche structurée et la membrane d'absorption est supérieure à $\lambda_0/10$, où $\lambda_0$ est la longueur d'onde centrale d'un pic d'absorption du pixel du détecteur bolométrique, dite longueur d'onde d'intérêt. On donne dans la suite plus de détails sur cette longueur d'onde.

La distance $d_2$ est mesurée depuis la face supérieure de la couche structurée 130, du côté de la membrane absorbante, jusqu'à la face inférieure de la membrane absorbante 110, du côté de la couche structurée.

La couche structurée 130 est isolée thermiquement de la membrane d'absorption 110, notamment par une couche d'un vide ou d'un gaz tel que l'air.

Sans précision sur la pression, une couche d'un gaz tel que l'air désigne une couche à la pression de l'air environnant, soit généralement 1,013 bar.

Dans tout le texte, un vide désigne un volume d'un gaz tel que l'air, présentant une pression strictement inférieure à 1 bar, par exemple inférieure à 0,5 bar, inférieure à 50 mbar ou moins.

Dans l'exemple illustré ici, cette couche d'un vide ou d'un gaz tel que l'air présente une épaisseur égale à la distance $d_2$.

La couche structurée est située en outre à distance du réflecteur.

De préférence, elle est en contact physique direct avec un même matériau, du côté du réflecteur et du côté de la membrane d'absorption.

La couche structurée 130 est constituée ici d'un réseau en un premier matériau, présentant un indice optique $n_{2h}$, les creux du réseau étant remplis par un matériau d'indice optique $n_{2b}$ strictement inférieur à $n_{2h}$.

Ici, les creux du réseau en matériau d'indice optique $n_{2h}$ sont remplis par un vide. En variante, ils sont remplis par un gaz tel que l'air, ou par un autre matériau solide.

De préférence, la hauteur des creux du réseau en matériau d'indice $n_{2h}$ est égale à l'épaisseur de la couche structurée 130 (dimension selon l'axe (Oz) défini plus loin). Ici, la couche structurée présente une épaisseur $h_2=380$ nm.

On peut considérer que la couche structurée 130 est constituée de deux réseaux mono-matériau imbriqués d'indice $n_{2h}$ respectivement $n_{2b}$, le matériau d'indice $n_{2b}$ étant un vide, ou un gaz tel que l'air ou un matériau solide. La couche structurée peut alors être considérée comme un réseau bi-matériaux.

En d'autres termes, la couche structurée 130 peut être considérée comme une membrane de fort indice structurée avec un milieu de bas indice, ou comme un réseau constitué d'une alternance de matériaux non métalliques avec un contraste d'indice tel que $n_{2b}<n_{2h}$ (en particulier $n_{2b}<n_{2h}-0,5$, comme détaillé dans la suite).

Dans tout le texte, un indice optique désigne un indice de réfraction à la longueur d'onde d'intérêt.

La couche structurée 130 est donc définie par une série de sauts d'indice entre l'indice optique $n_{2h}$ et l'indice optique $n_{2b}$. Ces sauts d'indice sont répartis dans des plans parallèles à la matrice d'absorption 110. Ainsi, la couche structurée ne forme pas un réseau du type réseau de Bragg, mais un réseau présentant des structurations réparties dans un plan parallèle à la matrice d'absorption.

Dans l'exemple illustré ici, la couche structurée 130 est constituée d'un réseau en silicium amorphe, les creux du réseau étant remplis par un vide. On a donc $n_{2h}=3,6$, et $n_{2b}=1$.

De nombreuses variantes peuvent être mises en oeuvre sans sortir du cadre de l'invention, vérifiant de préférence $n_{2h}-n_{2b}>0,5$, et de façon encore plus préférée $n_{2h}-n_{2b}>1$. En outre, on vérifie de préférence $n_{2h}>1,5$, et même $n_{2h}>3$.

Le matériau d'indice $n_{2h}$ peut être du silicium amorphe ou du germanium. Le matériau d'indice optique $n_{2b}$ peut être un vide, un gaz tel que l'air, de la silice, du sulfure de zinc, un nitrure.

La couche structurée 130 forme un réseau résonant à la longueur d'onde d'intérêt $\lambda_0$.

La couche structurée 130 est une structure résonante, qui envoie vers la membrane d'absorption 130 et/ou vers le réflecteur, un rayonnement électromagnétique présentant un pic d'intensité centré sur la longueur d'onde d'intérêt $\lambda_0$. Ce pic est étroit, de largeur à mi-hauteur inférieure, par exemple, à 50 nm. Ce pic d'intensité est nommé résonance à la longueur d'onde d'intérêt.

La résonance à la longueur d'onde d'intérêt est renvoyée vers la membrane d'absorption, directement, ou indirectement par l'intermédiaire du réflecteur 120.

On peut parler de membrane concentratrice pour désigner la couche structurée 130, ou de structure de filtrage intégrée.

Cette résonnance est absorbée par la membrane absorbante 110. L'absorption peut mettre en oeuvre un phénomène d'évanescence.

Afin que la résonance soit absorbée au mieux par la membrane absorbante 110, l'épaisseur $d_2$ définie plus haut est de préférence inférieure à $\lambda_0/2$. On a alors $\lambda_0/10<d_2<\lambda_0/2$. Dans l'exemple représenté ici, $d_2$=2000 nm.

La couche structurée 130 forme ici un réseau résonant périodique, tel que le pas P du réseau est inférieur à la longueur d'onde d'intérêt $\lambda_0$.

On a notamment $\lambda_0/2<P<\lambda_0$.

Il s'agit plus particulièrement d'un réseau présentant une périodicité d'ordre deux.

La figure 1A montre un pixel du détecteur bolométrique selon une coupe dans un plan parallèle au plan (zOy), où (Oz) est un axe orthogonal au plan de la membrane absorbante, et (Oxyz) un repère orthonormé.

La figure 1B montre ce pixel selon une vue en coupe dans un plan parallèle au plan (xOy) passant par la couche structurée 130.

Dans l'exemple illustré ici, la couche structurée 130 présente une périodicité selon deux dimensions (selon (Ox) et (Oy)), et le pas est le même selon ces deux dimensions.

La couche structurée 130 est formée ici de plots 131 constitués du matériau d'indice $n_{2h}$, les plots étant séparés par des interstices de vide.

On peut définir un facteur de remplissage volumique, correspondant au rapport entre le volume occupé par le matériau d'indice $n_{2h}$ dans la couche structurée 130 et le volume total de la couche structurée 130. Les plots étant à base carré, on s'intéresse ici plutôt à un facteur de remplissage linéique, correspondant au rapport entre la largeur L de ce carré et le pas P du réseau. Le facteur de remplissage linéique vaut ici 0,85.

Afin de maintenir la couche structurée 130 à distance du réflecteur, celle-ci est déposée sur une couche intermédiaire 140 elle-même déposée sur le réflecteur. La couche intermédiaire 140 assure un maintien mécanique de la couche structurée 130, notamment lorsque l'espace entre les plots est rempli par du vide ou un gaz tel que l'air.

La couche intermédiaire 140 est en contact physique direct avec le réflecteur 120 d'un côté, et la couche structurée 130 de l'autre côté. Elle présente de préférence une étendue au moins égale à celle de la couche structurée 130.

La couche intermédiaire 140 est en matériau solide. Elle est en matériau non métallique, ici en sulfure de zinc (ZnS), d'indice $n_1$=2,2. En variante, elle peut être en silice, en nitrure (ou constitué d'un vide ou d'un gaz tel que l'air comme illustré dans la suite).

Elle présente ici une épaisseur $h_1$ = 620 nm.

La couche intermédiaire 140 forme une couche homogène d'indice $n_1$ inférieur à $n_{2h}$, avec de préférence $n_{2h}-n_1>0,5$, et de façon encore plus préférée $n_{2h}-n_1>1$. De préférence, $n_1<2$.

La distance optique entre la membrane absorbante 110 et le réflecteur 120 est sensiblement égale à un multiple de $\lambda_0/2$. Par « sensiblement », on comprend comprise entre plus ou moins 15% de $\lambda_0/2$, autour d'un multiple de $\lambda_0/2$, de préférence 10% et même 5%. En d'autres termes, chaque pixel du détecteur bolométrique forme une cavité d'épaisseur optique $N^*\lambda_0/2$, N entier positif.

Cette distance optique est mesurée depuis la face inférieure de la membrane absorbante, du côté du réflecteur, jusqu'à la face supérieure du réflecteur, du côté de la membrane absorbante.

Une distance optique est définie par le produit d'une longueur et d'un indice optique, en particulier un indice optique moyen lorsque l'on considère une distance optique selon l'axe (Oz), dans la couche structurée 130.

Ici, la distance optique entre la membrane absorbante 110 et le réflecteur 120 est définie approximativement par :

$$D1=h_1*n_1 + h_2*[F*n_{2h}+(1-F)*n_{2b}] + d_2*n_{gap}$$

avec $n_{gap}$ l'indice dans la couche d'air ou de vide située entre la membrane absorbante et la couche structurée, et F le facteur de remplissage volumique défini ci-avant.

Avec les valeurs données ci-avant, on obtient D1=4,45 $\mu$m$\approx\lambda_0$.

Comme expliqué dans l'exposé de l'invention, cette distance optique est à l'origine d'une absorption quasi-nulle autour de $\lambda_0$, sur une large bande spectrale, excepté le pic d'absorption étroit généré par la résonance de la couche structurée 130.

La figure 2 illustre les spectres d'absorption 21, 22, 23 de détecteurs bolométriques du type de celui des figures 1A et 1B, qui diffèrent seulement par le pas P dans la couche structurée 130.

L'axe des abscisses est une longueur d'onde en nm. L'axe des ordonnées est un taux d'absorption normé.

Comme attendu, chaque spectre présente un pic étroit de largeur à mi-hauteur inférieure à 50 nm, par exemple 10 nm, et un creux d'absorption centré sur 4,45 $\mu$m (=D1).

Le creux d'absorption présente une largeur à mi-hauteur d'environ 1 $\mu$m (largeur du creux à une valeur de l'absorption égale à la moitié de l'amplitude pic-vallée du creux d'absorption). Ce creux d'absorption correspond en première approximation au complémentaire du pic d'absorption large bande d'un détecteur bolométrique selon l'art antérieur tel que décrit en introduction.

En fonctionnement, le rayonnement électromagnétique 200 incident sur le détecteur bolométrique présente une étendue spectrale comprise dans ce creux d'absorption. Par exemple, ce rayonnement est émis par une source large bande, dont la bande d'émission est comprise dans le creux d'absorption. En variante, un rayonnement très large bande est émis, puis filtré par un filtre spectral dont la bande de transmission est comprise dans le creux d'absorption.

Ainsi, un pixel du détecteur bolométrique détecte uniquement des variations d'intensité à la longueur d'onde du pic d'absorption, sans être perturbé par l'absorption aux longueurs d'onde voisines, qui est quasi-nulle.

On obtient ainsi une détection à très forte sensibilité spectrale, grâce au pic étroit situé dans un creux d'absorption.

Le spectre d'absorption 21 correspond à P=3750 nm. Le pic étroit du spectre 21 est centré sur une première longueur d'onde d'intérêt $\lambda_{01}$ égale à 4350 nm.

La distance optique D1 vérifie bien la condition énoncée ci-dessus, en particulier :

$$D1 = N* (\lambda_{01}/2) - (\lambda_{01}/2)*4,6\%, \text{ avec } N=2.$$

Le spectre d'absorption 22 correspond à P=3900 nm. Le pic étroit du spectre 22 est centré sur une deuxième longueur d'onde d'intérêt $\lambda_{02}$ égale à 4450 nm.

La distance optique D1 vérifie bien la condition énoncée ci-dessus, en particulier :

$$D1 = N* (\lambda_{02}/2), \text{ avec } N=2.$$

Le spectre d'absorption 23 correspond à P=4050 nm. Le pic étroit du spectre 23 est centré sur une troisième longueur d'onde d'intérêt $\lambda_{03}$ égale à 4550 nm.

La distance optique D1 vérifie bien la condition énoncée ci-dessus, en particulier :

$$D1 = N* (\lambda_{03}/2) + (\lambda_{03}/2)*4,4\%, \text{ avec } N=2.$$

La figure 2 illustre le fait que les caractéristiques de la couche structurée 130 permettent d'adapter les caractéristiques du pic étroit d'absorption.

En particulier, le pas du réseau résonant formant la couche structurée permet de définir la longueur d'onde d'intérêt $\lambda_0$.

On peut donc réaliser un détecteur bolométrique à plusieurs pixels, dans lequel plusieurs pixels présentent les caractéristiques de l'invention, mais ne sont pas tous associés à la même longueur d'onde d'intérêt.

En particulier, deux pixels adjacents peuvent être chacun sensible à une longueur d'onde d'intérêt différente, sans qu'il soit nécessaire que chaque pixel soit recouvert d'un filtre spectral distinct. On évite ainsi des phénomènes de cross-talk, dus notamment à la diffraction de la lumière sur le bord d'un filtre, lorsque deux filtres différents sont disposés au-dessus de deux pixels adjacents. En outre, l'invention permet des détections à deux longueurs d'onde différentes en simultané.

On peut notamment réaliser un détecteur bolométrique constitué d'une matrice de différents types de pixels qui diffèrent par leur longueur d'onde d'intérêt, répartis selon un agencement périodique, avec un motif élémentaire comprenant au moins un pixel de chaque type. Les pixels sont alors répartis en groupements de pixels, chaque groupement correspondant à un motif élémentaire.

Par exemple, les différents types de pixels sont répartis selon une matrice de Bayer. Ainsi, tous les types de pixels ne sont pas forcément présents en même nombre, et la proportion de chaque type de pixel permet de donner plus ou moins de poids à certaines longueurs d'onde d'intérêt.

On réalise ainsi un imageur multi-spectral, fournissant plusieurs images entrelacées, chacune associée à une longueur d'onde particulière, les images entrelacées formant ensemble une image multi-spectrale. Un tel imageur peut être adapté à l'acquisition d'une image d'une scène nocturne.

La figure 2 illustre également le fait que pour de faibles variations de la longueur d'onde d'intérêt, d'un pixel à l'autre, la distance optique D1 peut rester la même d'un pixel à l'autre. Ces faibles variations sont par exemple des variations inférieures à 300 nm, voire 200 nm.

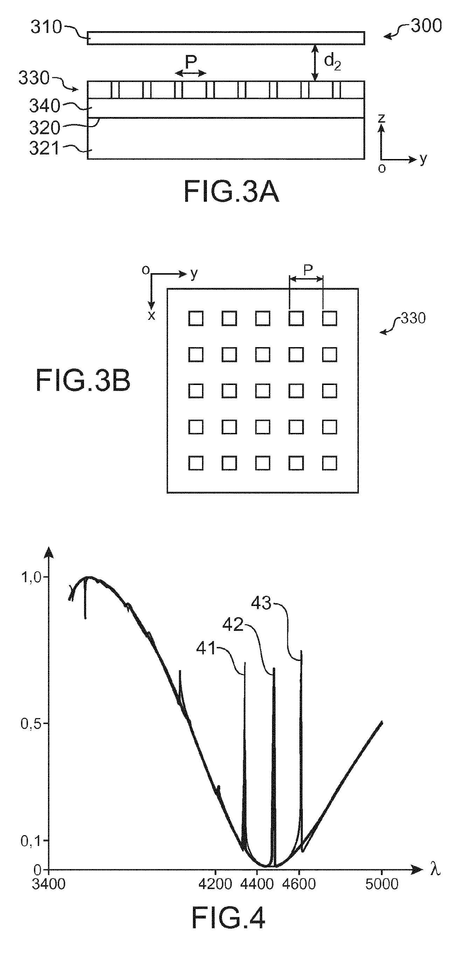

Les figures 3A et 3B illustrent de façon schématique un deuxième mode de réalisation d'un détecteur bolométrique 300 selon l'invention.

Les références numériques des figures 3A et 3B correspondent à celles des figures 1A et 1B, le chiffre des centaines étant remplacé par un 3.

Le deuxième mode de réalisation d'un détecteur bolométrique ne diffère du premier mode qu'en ce que la couche structurée 330 est une grille de trous traversant. Les trous traversant ont chacun une section carrée dans le plan (xOy), et sont répartis dans ce plan selon un maillage périodique en deux dimensions de pas P.

Le facteur de remplissage linéique vaut ici 0,25. La distance $d_2$ est ajustée de sorte que la distance optique D1 entre le réflecteur 320 et la couche structurée 310 soit toujours égale à 4,45 $\mu$m.

Le graphique de la figure 4 correspond à celui de la figure 2.

Le spectre 41 correspond à un pas P=3450 nm, le spectre 42 correspond à un pas P=3600 nm, le spectre 43 correspond à un pas P=3750 nm.

On obtient des résultats similaires à ceux obtenus avec le premier mode de réalisation, les pics étroits étant encore plus fins (largeur à mi-hauteur de quelques nm seulement, environ 5 nm).

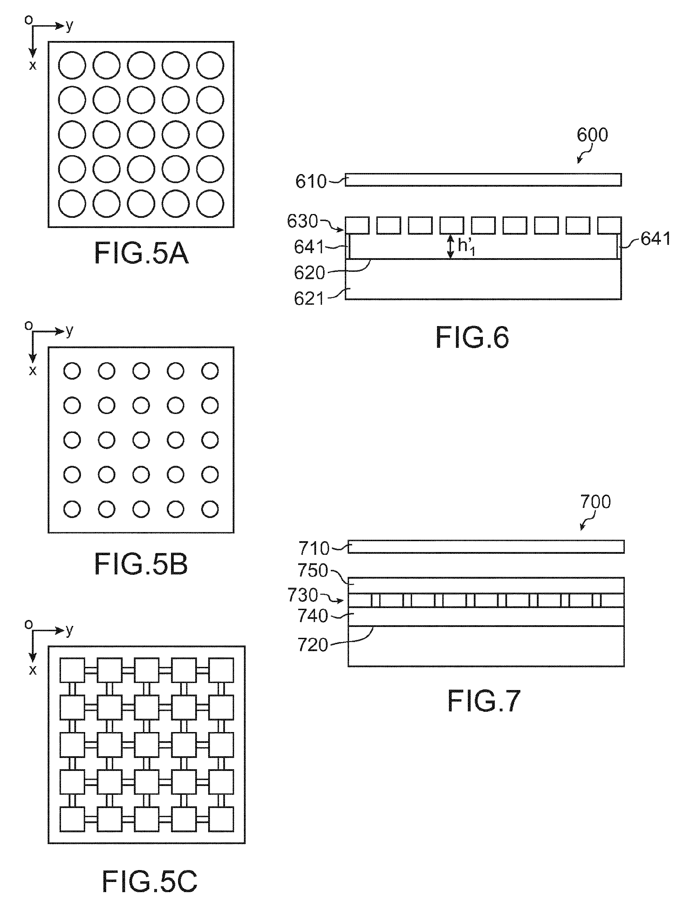

Les figures 5A à 5C illustrent différentes variantes d'une couche structurée d'un détecteur bolométrique selon l'invention.

A la figure 5A, la couche structurée est constituée d'un réseau de plots cylindriques à base circulaire, répartis selon un maillage carré.

Le facteur de remplissage linéique vaut 0,85, et la distance D1 vaut 4,45 $\mu$m. Pour des pas P=3300 nm, P=3450 nm, et P=3600 nm, on obtient des spectres d'absorption du types de ceux de la figure 2, excepté que la largeur à mi-hauteur est plus large, de l'ordre de 50 nm.

A la figure 5B, la couche structurée est constituée d'une grille de trous traversant. Les trous traversant ont chacun une section circulaire dans le plan (xOy), et sont répartis dans ce plan selon un maillage périodique en deux dimensions.

Le facteur de remplissage linéique vaut 0,25, et la distance D1 vaut 4,45 $\mu$m. Pour des pas P=3450 nm, P=3600 nm, et P=3750 nm, on obtient des spectres d'absorption du type de ceux de la figure 3.

A la figure 5C, la couche structurée est constituée d'un réseau de plots à base carré, du type de celui illustré en figure 1B, les plots étant reliés deux à deux par des ponts étroits.

Les plots sont répartis selon des lignes parallèles à (Ox) et selon des colonnes parallèles à (Ox). Chaque pont étroit s'étend parallèle à (Ox) ou à (Oy), selon un axe reliant les centres de deux plots voisins. Chaque plot est relié au plot voisin situé en-dessous, au-dessus, à droite et à gauche (si ce voisin existe).

Le pic étroit d'absorption dépend des caractéristiques de la couche structurée. Comme détaillé ci-avant, un pas de réseau permet d'ajuster la longueur d'onde d'intérêt (longueur d'onde centrale du pic). D'autres paramètres permettent également d'ajuster la longueur d'onde d'intérêt et/ou la largeur spectrale du pic. Ces paramètres sont notamment le facteur de remplissage linéique ou volumique, la section des plots, l'épaisseur de la couche structurée, la forme des plots, etc. Ces paramètres sont caractéristiques de la forme d'un motif élémentaire du réseau formé par la couche structurée.

Par exemple, un réseau de plots à base circulaire présente un pic d'absorption de plus grande largeur spectrale qu'un réseau de plots à base carré. De même, le facteur de remplissage linéique d'un réseau de plots permet d'ajuster la largeur spectrale du pic d'absorption.

La figure 6 illustre de façon schématique un troisième mode de réalisation d'un détecteur bolométrique 600 selon l'invention.

Les références numériques de la figure 6 correspondent à celles de la figure 3A, le chiffre des centaines étant remplacé par un 6.

Le troisième mode de réalisation d'un détecteur bolométrique ne diffère du deuxième mode qu'en ce que la couche structurée 630 est maintenue suspendue au-dessus du réflecteur, sans contact physique direct avec le réflecteur.

Pour maintenir la couche structurée 630 suspendue, des piliers 641 sont disposés entre la couche structurée 630 et le réflecteur 620.

La couche structurée 630 et le réflecteur 620 sont alors séparés par une couche d'air ou de vide, de hauteur $h_1$', avec ici $h_1$'=620 nm.

Ce mode de réalisation est adapté lorsque la couche structurée est formée par une grille de trous traversant, ou par des plots reliés entre eux par des ponts étroits, ou par deux réseaux mono-matériau imbriqués, chaque réseau étant constitué d'un matériau solide.

Ce mode de réalisation est obtenu à l'aide d'une couche sacrificielle qui est supprimée après réalisation de la couche structurée 630.

Il établit une symétrie de part et d'autre de la couche structurée (même matériau de chaque côté), permettant d'obtenir une absorption totale à la longueur d'onde d'intérêt.

La figure 7 illustre de façon schématique un quatrième mode de réalisation d'un détecteur bolométrique 700 selon l'invention.

Les références numériques de la figure 7 correspondent à celles de la figure 3A, le chiffre des centaines étant remplacé par un 7.

Le quatrième mode de réalisation d'un détecteur bolométrique ne diffère du deuxième mode qu'en ce que la couche structurée 730 est recouverte par une couche non métallique dite couche bas indice 750.

La couche bas indice est en contact physique direct avec la couche structurée 730, et séparée de la membrane d'absorption 710 par une couche d'air ou de vide.

Cette couche bas indice 750 présente un indice optique $n_3<n_{2h}$, avec de préférence $n_{2h}-n_3>0,5$, et même $n_{2h}-n_3>1$.

De préférence, la couche bas indice est constituée du même matériau que la couche intermédiaire 740.

Elle peut présenter en outre la même épaisseur que la couche intermédiaire 740.

La couche bas indice 750 permet de conserver une symétrie de part et d'autre de la couche structurée (même matériau de chaque côté), lorsque la couche structurée est déposée sur une couche intermédiaire en matériau solide. Une telle symétrie permet d'obtenir une absorption totale à la longueur d'onde d'intérêt.

La couche bas indice 750 permet également de protéger la couche structurée 730.

Elle est particulièrement adaptée lorsque la couche structurée est constituée de deux réseaux mono-matériau imbriqués, chaque réseau étant constitué d'un matériau solide.

Elle présente un indice optique supérieur à celui d'un vide ou de l'air, ce qui permet le cas échéant de réduire une hauteur totale du détecteur bolométrique selon l'invention pour une même distance optique D1 entre le réflecteur 720 et la membrane d'absorption 710.

Un autre avantage de cette couche bas indice est détaillé dans la suite.

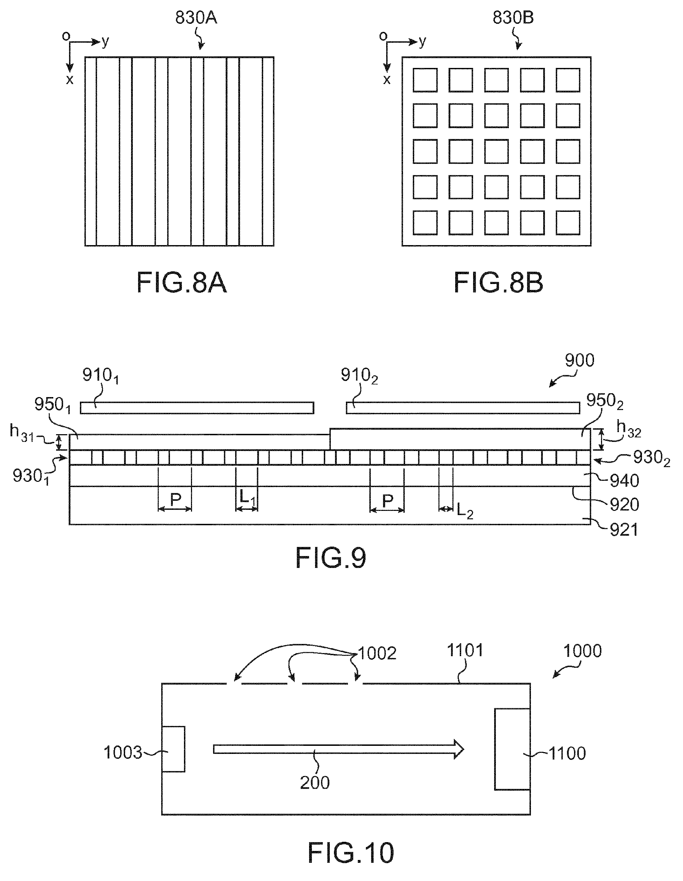

Les figures 8A et 8B illustrent deux autres variantes d'une couche structurée d'un détecteur bolométrique selon l'invention.

A la figure 8A, la couche structurée 830A forme un réseau résonant périodique selon une unique direction. Il s'agit d'un réseau du type réseau de traits.

Cette variante est adaptée lorsque le rayonnement électromagnétique à détecter est polarisé, notamment selon une polarisation rectiligne.

A la figure 8B, la couche structurée 830B forme un réseau résonant pseudo-périodique.

Un réseau pseudo-périodique est un réseau périodique, dans lequel les motifs élémentaires présentent de légères variations les uns relativement aux autres.

Il s'agit de variations de la forme d'un motif élémentaire, par exemple une variation de la largeur totale d'un motif (pas du réseau), une variation d'un facteur de remplissage linéique ou volumique (par exemple variation de la largeur des plots), et/ou une variation de la forme d'un plot ou d'un trou traversant d'une grille.

Ces variations sont limitées. En particulier, le taux de recouvrement de chaque motif élémentaire, relativement à une forme moyenne des motifs élémentaires, est compris entre 90% et 99%, et même entre 95% et 99%.

Dans l'exemple illustré en figure 8B, des plots sont répartis sensiblement selon un maillage carré, l'espacement entre deux plots selon l'axe (Oy) variant légèrement d'un plot à l'autre. Le pas de réseau selon (Oy) présente des variations comprises entre 1% et 10%, relativement à un pas de réseau moyen selon (Oy). Pour des raisons de lisibilité de la figure, les décalages sont exagérés sur la figure 8B.

A la figure 8B, la couche structurée forme un réseau pseudo-périodique selon deux dimensions.

En variante, la couche structurée peut former un réseau pseudo-périodique selon une seule dimension (du type réseau de traits avec légères variations d'un trait à l'autre).

Dans un réseau pseudo-périodique, le pic d'absorption est fonction des paramètres moyens du motif élémentaire, par exemple le pas de réseau moyen, le facteur de remplissage linéique ou volumique moyen, une forme moyenne des plots, etc.

Ce pic d'absorption est également fonction de l'écart-type sur ces paramètres moyens, d'un motif élémentaire à l'autre. Plus cet écart-type est élevé, plus le pic d'absorption présente une grande largeur spectrale.

Par exemple, on peut fixer la longueur d'onde d'intérêt à l'aide du pas de réseau moyen, et la largeur spectrale du pic d'absorption à l'aide de l'écart-type sur le pas de réseau, d'un motif élémentaire à l'autre.

Ainsi, la couche structurée selon l'invention peut former un réseau périodique ou pseudo-périodique selon deux dimensions (présentant une périodicité d'ordre deux), ou un réseau périodique ou pseudo-péridioque selon une dimension (présentant une périodicité d'ordre un).

La figure 9 illustre de façon schématique deux pixels d'un cinquième mode de réalisation d'un détecteur bolométrique 900 selon l'invention.

Chaque pixel ne sera décrit que pour ses différences relativement au pixel du quatrième mode de réalisation.

Les références numériques de la figure 9 correspondent à celles de la figure 7, le chiffre des centaines étant remplacé par un 9.

Les deux pixels représentés sont deux pixels d'un détecteur bolométrique matriciel, constitué d'une pluralité de pixels.

Les pixels partagent un même substrat 921, un même réflecteur 920, et une même couche intermédiaire 940, formés chacun d'un seul tenant sur toute l'étendue de la matrice de pixels.

En variante, chaque pixel comprend un réflecteur distinct.

Chaque pixel présente sa propre membrane d'absorption $910_1$, respectivement $910_2$, et sa propre couche structurée $930_1$, respectivement $930_2$.

Leurs couches structurées respectives forment chacune un réseau résonant de facteur de remplissage linéique $L_1/P$, respectivement $L_2/P$.

Les deux pixels adjacents sont donc chacun adaptés à la détection d'une longueur d'onde d'intérêt différente $\lambda_{01}$, respectivement $\lambda_{02}$.

Chaque couche structurée $930_1$, respectivement $930_2$, est recouverte d'une couche bas indice correspondante $950_1$, respectivement $950_2$.

L'épaisseur $h_{31}$, respectivement $h_{32}$ de chaque couche bas indice est adaptée de sorte que dans chaque pixel, la distance optique entre le réflecteur et la membrane d'absorption soit sensiblement égale à un multiple de la moitié de la longueur d'onde d'intérêt.

En particulier, $h_{31}$ est adaptée pourque cette distance optique dans le pixel de gauche soit sensiblement égale à un multiple de $\lambda_{01}/2$, et $h_{32}$ est adaptée pour que cette distance optique dans le pixel de droite soit sensiblement égale à un multiple de $\lambda_{02}/2$.

La couche bas indice permet donc que dans un détecteur bolométrique multi-spectral, toutes les membranes d'absorption soient situées dans un même plan, tous les réflecteurs soient situés dans un même plan, et que dans chaque pixel la distance optique entre le réflecteur et la membrane d'absorption soit ajustée à la longueur d'onde d'intérêt associée à ce pixel.

Ce mode de réalisation est particulièrement adapté lorsque les pixels d'un même détecteur bolométrique sont associés à des longueurs d'onde qui diffèrent de plus de 200 nm, et même plus de 300 nm.

Le détecteur bolométrique selon l'invention trouve un intérêt particulier pour la détection de gaz (spectroscopie dans l'infrarouge), en permettant que chaque pixel du détecteur ne soit sensible que sur une gamme spectrale caractéristique d'une espèce gazeuse. On peut ainsi réaliser des capteurs de gaz présentant un excellent rapport signal sur bruit.

La figure 10 illustre un capteur de gaz 1000 comprenant une cavité 1001 pourvue d'ouvertures 1002 pour laisser entrer un gaz.

Une source infra-rouge 1003 de type corps noir émet un rayonnement électromagnétique 200 à l'intérieur de cette cavité. La source est dite de type corps noir, car elle émet un rayonnement infra-rouge à une longueur d'onde fonction notamment de sa température. En particulier, la source émet un rayonnement large bande, sur une bande spectrale allant de 3 $\mu$m à 5 $\mu$m. En variante, elle émet un rayonnement sur une bande spectrale allant de 8 $\mu$m à 12 $\mu$m. Un filtre peut être disposé en sortie de la source, pour sélectionner une bande spectrale plus étroite, par exemple de largeur spectrale 1 $\mu$m.

Un détecteur bolométrique 1100 selon l'invention est disposé à l'intérieur de la cavité, face à la source infra-rouge.

L'étendue spectrale du rayonnement large bande émis à l'intérieur de la cavité correspond à l'étendue spectrale du creux d'absorption du détecteur bolométrique.

Le rayonnement électromagnétique 200 émis par la source infra-rouge traverse la cavité remplie d'un gaz.

Le gaz absorbe dans une bande spectrale étroite de largeur à mi-hauteur généralement inférieure à 300 nm. Ladite bande spectrale est caractéristique d'un gaz. Ainsi, en identifiant la ou les bandes spectrales absorbées à l'intérieur de la cavité 1001, on peut identifier le ou les gaz présents dans la cavité.

Le détecteur bolométrique comprend plusieurs pixels, associés chacun à un pic d'absorption centré sur une longueur d'onde d'intérêt différente. Chaque longueur d'onde d'intérêt correspond à une longueur d'onde centrale d'une absorption caractéristique d'un gaz.

Grâce à la grande sensibilité spectrale du détecteur bolométrique selon l'invention, on identifie un gaz de façon très fiable, et on peut déterminer de façon précise sa concentration à l'intérieur de la cavité 1001 en mesurant une variation relative de signal.

Grâce au pic d'absorption étroit situé dans une zone d'absorption quasi-nulle, un pixel du détecteur bolométrique n'absorbe que dans la bande spectrale d'absorption du gaz, et n'absorbe pas un fond continu dû à toutes les longueurs d'onde émises par la source et non absorbées par le gaz. La variation relative de signal en fonction d'une concentration de ce gaz sera donc bien plus forte qu'avec des bolomètres selon l'art antérieur.

L'invention présente également un intérêt particulier, en ce qu'elle permet une détection simultanée de multiples gaz. Pour cela, on réalise un détecteur bolométrique à plusieurs pixels (ou groupes de pixels), sensibles chacun respectivement à l'un des gaz. On peut ainsi déterminer aisément les différentes concentrations des différents gaz. Les bolomètres de l'art antérieur sont incapables de remonter à la concentration de chaque gaz, car ils sont sensibles à tous les gaz en même temps, et différentes combinaisons de concentrations de gaz donneront le même signal sur le bolomètre.

D'autres utilisations avantageuses peuvent être mises en oeuvre, par exemple des imageurs, en particulier des imageurs à vision nocturne.

**Revendications**

1. Détecteur bolométrique (100; 300; 600 ; 700 ; 900; 1100) à au moins un pixel, chaque pixel comprenant :

   - une membrane d'absorption (110 ; 310 ; 610 ; 710 ; $910_1$; $910_2$), adaptée à convertir en chaleur un rayonnement électromagnétique incident (200) ; et
   - un réflecteur (120 ; 320 ; 620 ; 720 ; 920), agencé pour réfléchir vers la membrane d'absorption une part du rayonnement électromagnétique incident ayant traversé celle-ci ;

   **caractérisé en ce que** :

   - au moins un pixel comprend en outre une couche non métallique dite couche structurée (130; 330; 630; 730; $930_1$; $930_2$), située entre la membrane d'absorption et le réflecteur et isolée thermiquement de la membrane d'absorption, présentant une série de sauts d'indice entre un premier indice optique et un second indice optique dans un plan parallèle à la membrane d'absorption, de façon à former un réseau résonant à une longueur d'onde dite d'intérêt $\lambda_0$ ;
   - le pas moyen du réseau (P) est inférieur à ladite longueur d'onde d'intérêt ; et
   - la distance optique entre la membrane d'absorption et le réflecteur est sensiblement égale à un multiple de $\lambda_0/2$.

2. Détecteur bolométrique (100 ; 300 ; 600 ; 700 ; 900 ; 1100) selon la revendication 1, **caractérisé en ce qu'**une différence entre le premier indice optique et le second indice optique est supérieure à 0,5.

3. Détecteur bolométrique (100 ; 300 ; 600 ; 700 ; 900 ; 1100) selon la revendication 1 ou 2, **caractérisé en ce que** le pas moyen du réseau (P) est compris entre $\lambda_0/2$ et $\lambda_0$, où $\lambda_0$ est la longueur d'onde d'intérêt.

4. Détecteur bolométrique (100 ; 300 ; 600 ; 700 ; 900 ; 1100) selon l'une quelconque des revendications 1 à 3, **caractérisé en ce que** le réseau résonnant est un réseau périodique.

5. Détecteur bolométrique selon l'une quelconque des revendications 1 à 3, **caractérisé en ce que** le réseau résonnant (830B) est un réseau pseudo-périodique, présentant des variations de la forme du motif élémentaire telles qu'un taux de recouvrement relativement à une forme moyenne des motifs élémentaires soit compris entre 90% et 99%.

6. Détecteur bolométrique (100 ; 300 ; 600 ; 700 ; 900 ; 1100) selon l'une quelconque des revendications 1 à 5, **caractérisé en ce que** le réseau résonnant présente des sauts d'indice répartis selon les deux dimensions d'un plan parallèle à la membrane d'absorption.

7. Détecteur bolométrique selon l'une quelconque des revendications 1 à 5, **caractérisé en ce que** le réseau résonnant (830A) présente des sauts d'indice répartis selon une seule dimension d'un plan parallèle à la membrane d'absorption.

8. Détecteur bolométrique (100 ; 300 ; 600 ; 700 ; 900 ; 1100) selon l'une quelconque des revendications 1 à 7, **caractérisé en ce que** chaque saut d'indice est constitué par une interface entre un premier matériau et un second matériau, et **en ce que** l'un desdits matériaux est un vide ou un gaz tel que l'air.

9. Détecteur bolométrique (100 ; 300 ; 600 ; 700 ; 900 ; 1100) selon l'une quelconque des revendications 1 à 8, **caractérisé en ce qu'**un écart ($d_2$) entre la couche structurée et la membrane d'absorption est inférieur à $\lambda_0/2$, où $\lambda_0$ est la longueur d'onde d'intérêt.

10. Détecteur bolométrique (700 ; 900) selon l'une quelconque des revendications 1 à 9, **caractérisé en ce que** la couche structurée (730; $930_1$; $930_2$) est recouverte d'une couche non métallique dite couche bas indice (750 ; $950_1$; $950_2$), espacée de la membrane d'absorption.

11. Détecteur bolométrique (100 ; 300 ; 600 ; 700 ; 900 ; 1100) selon l'une quelconque des revendications 1 à 10, **caractérisé en ce qu'**il présente une pluralité de pixels, et **en ce qu'**au moins deux pixels diffèrent par leur forme moyenne des motifs élémentaires de sorte qu'ils sont adaptés à la détection de longueurs d'onde d'intérêt différentes.

**12.** Détecteur bolométrique (900) selon la revendication 11, **caractérisé en ce que** chaque pixel présente une couche bas indice ($950_1$; $950_2$), recouvrant la couche structurée associée à ce pixel et espacée de la membrane d'absorption correspondante, les couches bas indice ($950_1$; $950_2$) associées chacune à un pixel présentant différentes épaisseurs.

**13.** Détecteur bolométrique (100 ; 300 ; 700 ; 900 ; 1100) selon l'une quelconque des revendications 1 à 12, **caractérisé en ce qu'**une couche intermédiaire non métallique (140 ; 340 ; 740 ; 940) s'étend entre le réflecteur et la membrane structurée.

**14.** Capteur de gaz (1000) comprenant une source infrarouge (1003), agencée pour émettre un rayonnement électromagnétique (200) à l'intérieur d'une cavité (1001), **caractérisé en ce que** la cavité contient un détecteur bolométrique (1100) selon l'une quelconque des revendications 1 à 13.

FIG.1A

FIG.1B

FIG.2

FIG.3A

FIG.3B

FIG.4

FIG.5A

FIG.5B

FIG.5C

FIG.6

FIG.7

FIG.8A

FIG.8B

FIG.9

FIG.10

Europäisches
Patentamt

European
Patent Office

Office européen
des brevets

# RAPPORT DE RECHERCHE EUROPEENNE

Numéro de la demande

EP 16 19 2592

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/054462 A1 (SAMARAO ASHWIN K [US] ET AL) 27 février 2014 (2014-02-27) | 1-4,6-9 | INV. G01J5/08 |
| Y | * figures 5, 6, 7, 12 * <br> * alinéas [0043], [0045], [0047], [0048] * <br> ----- | 5,10-14 | G01J5/02 G01J5/10 G01J5/20 |
| Y | US 2013/051419 A1 (CHANG-HASNAIN CONNIE [US] ET AL) 28 février 2013 (2013-02-28) <br> * figures 11A-11D, 16, 18 * <br> * alinéa [0059] * <br> * alinéa [0081] * <br> * alinéa [0104] - alinéa [0107] * <br> ----- | 5,10-13 | |
| Y | EP 0 773 435 A2 (TEXAS INSTRUMENTS INC [US]) 14 mai 1997 (1997-05-14) <br> * figure 14a * <br> ----- | 14 | |

**DOMAINES TECHNIQUES RECHERCHES (IPC)**

G01J

Le présent rapport a été établi pour toutes les revendications

| Lieu de la recherche | Date d'achèvement de la recherche | Examinateur |
|---|---|---|
| Munich | 19 décembre 2016 | Parise, Berengere |

**ANNEXE AU RAPPORT DE RECHERCHE EUROPEENNE
RELATIF A LA DEMANDE DE BREVET EUROPEEN NO.**

EP 16 19 2592

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2016

| Document brevet cité au rapport de recherche | | Date de publication | Membre(s) de la famille de brevet(s) | | Date de publication |
|---|---|---|---|---|---|
| US 2014054462 | A1 | 27-02-2014 | CN | 104755890 A | 01-07-2015 |
| | | | DE | 112013004113 T5 | 07-05-2015 |
| | | | JP | 2015531869 A | 05-11-2015 |
| | | | TW | 201418678 A | 16-05-2014 |
| | | | US | 2014054462 A1 | 27-02-2014 |
| | | | WO | 2014031876 A1 | 27-02-2014 |
| US 2013051419 | A1 | 28-02-2013 | US | 2013051410 A1 | 28-02-2013 |
| | | | US | 2013051419 A1 | 28-02-2013 |
| | | | WO | 2011106551 A2 | 01-09-2011 |
| | | | WO | 2011106554 A2 | 01-09-2011 |
| EP 0773435 | A2 | 14-05-1997 | AUCUN | | |

EPO FORM P0460

Pour tout renseignement concernant cette annexe : voir Journal Officiel de l'Office européen des brevets, No.12/82

**EP 3 153 831 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2977937